# EUROPEAN PATENT SPECIFICATION

(11) **EP 2 442 597 B1**
(45) Date of publication and mention of the grant of the patent: **18.09.2019**
(21) Application number: 09845711.2
(22) Date of filing: 28.10.2009
(51) Int. Cl.: H04W 8/08, H04L 29/08, H04W 8/20

(54) **USER DATA CONVERGENCE NETWORK SYSTEM AND METHOD FOR SUBCRIPTION TO A NOTIFICATION**
BENUTZERDATENKONVERGENZ-NETZWERKSYSTEM UND VERFAHREN ZUR ANMELDUNG FÜR EINE BENACHRICHTUNG
SYSTÈME DE RÉSEAU À CONVERGENCE DE DONNÉES D'UTILISATEUR ET PROCÉDÉ D'ABONNEMENT À UNE NOTIFICATION

(30) Priority: 11.06.2009 CN 200910142473
(43) Date of publication of application: 18.04.2012
(73) Proprietor: ZTE Corporation, Shenzhen, Guangdong 518057 (CN)
(72) Inventor: DING, Zhaoming, Shenzhen Guangdong 518057 (CN); ZHU, Kun, Shenzhen Guangdong 518057 (CN); QU, Aiyan, Shenzhen Guangdong 518057 (CN)
(74) Representative: Aipex B.V.
(86) International application number: PCT/CN2009/074643
(87) International publication number: WO 2010/142102

(56) References cited:
- CN-A- 1 866 833
- CN-A- 101 562 578
- "3rd Generation Partnership Project; Technical Specification Group Core Network and Terminals; User Data Convergence; Technical Realization and Information Flows; Stage 2 (Release 9)", 3GPP STANDARD; 3GPP TS 23.335, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.2.0, 1 June 2009 (2009-06-01), pages 1-20, XP050363601,
- '3GPP; TSG CN and Terminals; UDC; Technical Realization and formation Flows; Stage 2 (Release 9)' 3GPP TS 23.335 V0.1.0, [Online] May 2009, XP002591554 Retrieved from the Internet: <URL:www.3gpp.org/ftp/Specs/html-info/23335 .htm> [retrieved on 2010-02-09]

## Description

### Technical Field

The present invention relates to the field of mobile communication, and more especially, to a user data convergence (UDC) network system and method for implementing subscription to notification based on the UDC network.

### Background of the Related Technology

With the development of Internet Technology (IT) software and hardware technologies as well as the development of services, besides the conventional public switched telephone network (PSTN) as well as the 2^{nd} generation network, more and more communication networks are introduced and become standards, such as the 3^{rd} generation (3G) network, IP multimedia sub-system (IMS) network, worldwide interoperability for microwave access (WiMAX) network, soft switching network and so on, which significantly increases the user data in the network.

With the explosion of user data in the network, the original user data storage and the method for provision are more and more difficult to adapt to the rapid development of networks. The data decentralized management results in high operating expenditure (OPEX), and garbage data is hard to be deleted, and it is difficult to guarantee the data consistency and the data security, and there is no effective means for data mining analysis. Moreover, since the data storage network element has different external interfaces, the data access interface is complicated, and the interface and services are tightly coupled with each other, and the data cannot be transported transparently, and new services are difficult to be developed effectively, and issues in the user data management are increasingly evident.

Therefore, the concept of uniform user data model is provided in the industry, that is, the data scattering in different network elements but belonging to the same user are converged, and take the user identity as the basic identity, and it is organized according to the uniform data structure and works as the unique user data source in all networks.

In physical implementation, the uniform user data model is stored in the unique data storage network element of the network: the center database (CDB), and the CDB stores the uniform data model of the user to guarantee the consistency, reliability and security of the data, and it provides an open interface unrelated to the services and data and provides data access service for other data query network elements.

When converging terminal data, data in the access or core network, service data and Internet service data, applications and data are decoupled and a uniform user data center is uniformly managed and established, therefore, the network can be simplified, new service publication time can be shortened, and service innovation is promoted, thus to lay a foundation for providing the operators with competitive service convergence.

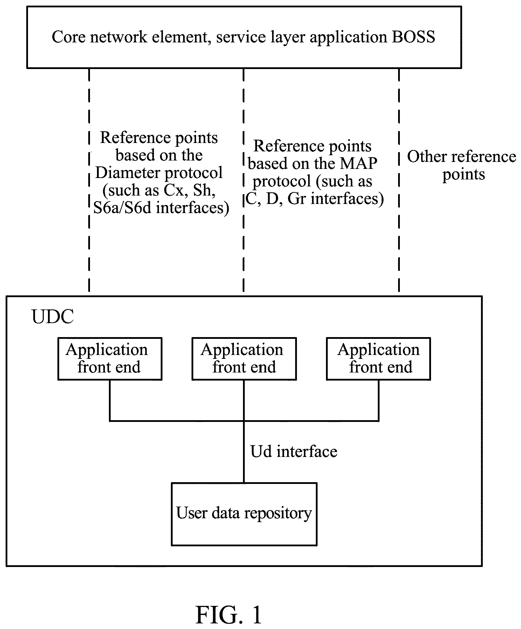

FIG. 1 describes the network system model established for the UDC by the 3^{rd} generation partnership project (3GPP) organization in the prior technology. Wherein, the UDC network comprises application front ends supporting a plurality of applications and a user data repository. The application front end process the application logic that is not related to the data and is not responsible for storing the user data information. As the user data center in the network, the user data repository converges all kinds of application data and provides a uniform open Ud access interface for different application front ends.

The UDC network system does not affect the existing network system, that is, the existing interfaces between the application front ends and the core network elements, the service layer applications as well as the business & operation support system (BOSS) will not be affected. For example, the application front end supporting the home subscriber service (HSS) application needs to support the S6a/S6d interface, Cx, Sh interface and so on based on Diameter protocol and supported by HSS. The application end supporting the home location register (HLR) application needs to support the C, D and Gr interfaces and so on based on the mobile application part (MAP) protocol and supported by the HLR.

The UDC network is required to support the subscription to notification function, the subscription to notification mechanism in the original network, however, is based on network systems in which applications and data are coupled, that is, the application logic processing and data are stored in one network entity, thus it cannot meet effectively the requirement of network systems in which the service applications and data are separated.

The application server (AS) might send a subscription to notification message to the HSS application front end via the existing Sh interface to request subscribing the notification event about the change of a specific user's subscription data stored in the user data repository. However, there is no technical scheme for the HSS application front end to establish the subscription to notification relationship in the user data repository based on the Ud interface in the prior technology.

Furthermore, for a certain non-obvious subscription to notification, for example, due to the management requirements, the operators need to delete the location information of a registered user stored in the home network, and at this time, the home network should trigger the location cancellation message to the network element entity registered by the user. However, there is no technical scheme to establish the implicit subscription to notification relationship and to trigger the location cancellation message based on the UDC network system in the prior technology.

In addition, the HSS supporting the Diameter application is required to send the location cancellation message to other networks based on the MAP application in the prior technology. For example, users switch to the mobile management entity (MME) in the Evolved Packet System (EPS) network from the Serving GPRS Supporting Node (SGSN) entity in the General Packet Radio System (GPRS) which does not support the Idle-mode Signalling Reduce (ISR) function, and the MME needs to set the single registration indication flag bit. After the HSS application front end receives the update location request message sent from the MME, it checks the single registration indication flag bit, and it needs to send the location cancellation message based on the MAP protocol to the SGSN entity which the user has already registered. In the prior technology, however, there is no technical scheme for implementing the message triggering between different network domains based on the UDC network system.

To sum up, it needs the corresponding technical schemes to solve the problems about how to establish an explicit subscription to notification relationship, that is, establish a subscription to notification relationship with a request message and an implicit subscription to notification relationship, that is, pre-configure a subscription to notification relationship in advance based on the UDC network system as well as how to implement the triggering of the expected notification message based on this subscription to notification relationship.

Because of this, it is desirable to provide a subscription to notification technology based on the UDC network to implement the subscription to notification in the UDC network system.

The document, "3rd Generation Partnership Project; Technical Specification Group Core Network and Terminals; User Data Convergence; Technical Realization and Information Flows; Stage 2 (Release 9)", discloses that the UDC concept (3GPP TS 22.101 [3]) supports a layered architecture, separating the data from the application logic in the 3GPP system, so that user data is stored in a logically unique repository allowing access from core and service layer entities, named Application Front Ends.

### Summary of the Invention

To solve the problem in the prior technology, the present invention provides a UDC network system as well as a method for implementing subscription to notification based on the UDC network to solve the problem about how to implement subscription to notification in the UDC network system.

The present invention provides a method according to claim 1. Further improvements and embodiments are provided in the dependent claims.

Also provided is a method for implementing subscription to notification, and the method is applied to a user data convergence (UDC) network including a user data repository, and the method comprises:
establishing a subscription to notification relationship in the user data repository; the subscription to notification relationship comprising a notification triggering condition which describes a condition for the user data repository sending a notification message;
when receiving an update data request, if the update data request meets the notification triggering condition or a notification is required to be sent, the user data repository sending the notification message to a notification event subscriber.

Preferably, a following method is used to establish the subscription to notification relationship in the user data repository:
after the user data repository receives a subscription to notification request message or a modify data request message carrying a subscription to notification request indicator, store the subscription to notification information; alternatively the user data repository pre-configures and stores the subscription to notification information according to the local configuration policy.

Preferably, the subscription to notification request message or modify data request message is sent by an application server (AS) supporting the UDC to the user data repository via an AS application front end, or sent by a home subscriber service application front end indicated by the AS which doesn't support the UDC to the user data repository.

Preferably, the step of establishing the subscription to notification relationship comprises: storing an original address of subscriber and subscription data, and setting a data subscription status corresponding to the notification triggering condition as subscribed;
wherein the original address of subscriber comprises: the AS identity or address, or the AS application front end identity or address;
the subscription data describes that user subscription data corresponding to subscription data subscribed by subscription to notification event is a request data identity or a request data domain name.

Alternatively,
the step of establishing the subscription to notification relationship comprises: the user data repository pre-configures and stores the notification triggering condition and notification type according to the local configuration policy, and the notification triggering condition has a corresponding relationship with the notification type. Preferably, content of the notification triggering condition comprises the data subscription status and a data change status, or a subscription event, or the subscription event as well as the data change status;
the data subscription status describes a subscription status of data requested by a subscription to notification event on subscription data;
the data change status describes a change status of data subscribed by the subscription to notification event on the subscription data;
the subscription event describes an event to be triggered for the notification message.

As long as any one of following conditions is met, the update data request meets the notification triggering condition:
the data is in the subscribed status and has changed;
the event is in the subscribed status;
the event is in the subscribed status and data related to the event changes;
a message corresponding to the event carries a notification flag indicating to send the notification message.

Preferably, after the step of receiving the update data request, the method also comprises:
judging whether the user subscription data changes or not and checking whether the user subscription data is in the subscribed status or not, or judging whether an event corresponding to the update data request is in the subscribed status, or judging whether the event corresponding to the update data request is in the subscribed status and the related user subscription data changes or not, or judging whether the event corresponding to the update data request carries the notification flag or not; and
determining whether the update data request meets the notification triggering condition or not according to a judgment result.

Preferably, the step of judging whether the user subscription data changes or not comprises:
the user data repository or an application front end compares whether the user subscription data changes or not and acquires a comparison result;
the step of determining whether the update data request meets the notification triggering condition or not according to the judgment result comprises: the user data repository determining whether the update data request meets the notification triggering condition or not according to the comparison result.

Preferably, after the step of receiving the update data request, the method also comprises:
judging whether a notification is required to be sent or not according to related information of the application front end, which comprises: the user data repository judging whether the application front end sending the request message supports an application type required to process the notification message;
   alternatively
judging whether to send a notification or not according to an indication flag carried in the request message. Preferably, the subscription to notification relationship comprises the notification type, and the notification type is used to indicate the service operation required to be executed by the notification event subscriber; the notification message carries the notification type and notification data information.

Preferably, when the notification type indicates the notification event subscriber to perform the subscription to notification on the subscription data, the notification data information comprises the original address of subscriber, a user identity and subscription to notification data; the subscription to notification data is the latest changing content of the data subscribed in the subscription to notification event;
when the notification type indicates the notification event subscriber to execute location cancellation, the notification data information comprises the user identity as well as a current registered network entity identity or address of user.

Preferably, the step of the notification type indicating the notification event subscriber to perform the location cancellation comprises:
indicating the HSS application front end to delete the user's registration information in a current network, or indicating a home location register (HLR) application front end to delete the user's registration information in a current general packet radio system (GPRS) network.

In order to solve the abovementioned technical problem, the present invention also provides a user data convergence (UDC) network system, which comprises a first application server (AS), a second application server, a home subscriber service (HSS) application front end and a user data repository, wherein:
the first application server is configured to send a subscription to notification request message to the HSS application front end;
the HSS application front end is configured to: after receiving the subscription to notification request message sent from the first AS, send the subscription to notification request message or a modify data request message carrying a subscription to notification request indicator to the user data repository;
the second AS is configured to send the subscription to notification request message or the modify data request message carrying the subscription to notification request indicator to the user data repository via an AS application front end;
the user data repository is configured to: establish a subscription to notification relationship according to the subscription to notification request message or the modify data request message carrying the subscription to notification request indicator, or pre-establish the subscription to notification relationship; the subscription to notification relationship comprises a notification triggering condition, and the notification triggering condition describes a condition for the user data repository sending a notification message; when receiving an update data request, if the update data request meets the notification triggering condition, send the notification message to a notification event subscriber.

Preferably, the user data repository is configured to establish the subscription to notification relationship by a following method: storing an original address of subscriber and subscription data, setting a data subscription status corresponding to the notification triggering condition as subscribed; the original address of subscriber comprising: an AS identity or address, or the AS application front end identity or address; the subscription data describing user subscription data corresponding to a subscription data change subscribed by subscription to notification event.

Compared with the prior technology, with the explicitly or implicitly establishing the subscription to notification relationship in the present invention, the problem of implementing the subscription to notification in the network system where the application logic processing and the data storage are separated is effectively solved, and based on the established subscription to notification relationship, the triggering of the expected notification message is achieved.

### Brief Description of Drawings

- FIG. 1: is a schematic diagram of the UDC network system in the related art;
- FIG. 2: is a schematic diagram of the explicitly establishing the subscription relationship based on the UDC network system in accordance with the present invention;
- FIG. 3: is a flow chart of the first implementation method for triggering the notification about modification in the service subscription data in accordance with an embodiment of the present invention;
- FIG. 4: is a flow chart of the second implementation method for triggering the notification about modification in the service subscription data in accordance with an embodiment of the present invention;
- FIG. 5: is a flow chart of triggering a notification after deleting the user location information in accordance with an embodiment of the present invention;
- FIG. 6: is a flow chart of sending a message request to another network domain based on the notification message triggering in accordance with an embodiment of the present invention;
- FIG. 7: is a combination schematic diagram of an embodiment of the UDC network system in accordance with the present invention.

### Preferred Embodiments of the Present Invention

The embodiments of the present invention will be illustrated in detail below in combination with the accompanying figures and embodiments, so as to fully understand how the present invention uses technical means to solve the technical problem and the process of achieving the technical effects and implement it.

The application front end of the UDC network in the prior technology processes the application logic which is not related to the data, and it is not responsible for storing the subscription data information, and it is not aware whether the specific data is subscribed to update the notification event; wherein, the user data repository stores the data, and it does not know whether the data changes or not, so that it cannot effectively trigger the notification message.

The main concept of achieving the subscription to notification based on the UDC network system in the present invention is: establishing the subscription to notification relationship in the user data repository at first, including explicitly establishing the subscription to notification relationship via a request message and implicitly pre-configuring and establishing the subscription to notification relationship by the local configuration policy; wherein, the subscription to notification relationship comprises the notification triggering condition and the notification type, as well as the subscription to notification data information on the subscription data generated by the explicit subscription to notification.

The notification triggering condition describes the condition for the user data repository sending a notification message, for example, for explicitly establishing the subscription to notification relationship, if the data is in the subscribed status and has changed, it is considered that it meets the notification triggering condition, and for implicitly establishing the subscription to notification relationship, if the event is in the subscribed status or the event is in the subscribed status and the data related to the event has changed, or the message corresponding to the event carries the notification flag indicating to send the notification message, it is considered that it meets the notification triggering condition. For example, the notification triggering condition corresponding to the subscription to notification on the subscription data comprises the data subscription status and the data change status, wherein the data change status describes the change status of the data subscribed by the subscription to notification event on the subscription data; the notification triggering condition corresponding to the location cancellation comprises the user location information deletion event or other possible event.

The notification type such as the indicator or the indication identity, corresponds to different notification triggering conditions, which is a one to multiple relationship, and it is used to indicate the service operation required to be performed by the application front end receiving the notification message.

When receiving the update data request message, the user data repository checks the notification triggering condition or directly judges whether it needs to send a notification, and if the condition is met or it needs to send a notification, trigger the notification process of the application front end supporting the application. The update data request comprises insertion, deletion or update of the user data and so on.

There are two methods for the user data repository checking the notification triggering condition: one method is that the user data repository directly compares whether the user subscription data changes or not, and completes checking the notification triggering condition according to the comparison result; the other method is that the application front end compares whether the user subscription data changes or not, and sends the comparison result to the user data repository via the interface message, and the user data repository completes checking the notification triggering condition according to the comparison result, wherein the interface message carries the indication flag indicating whether the user subscription data changes or not.

There are also two methods for the user data repository directly judging whether it needs to send a notification or not: one method is judging whether it needs to trigger a notification message or not according to the related information of the application front end, for example, if the application front end sending the request message supports the application type needed for processing the notification message, there is no need to trigger the notification message, otherwise, it is required to trigger the notification message; the other method is that the application front end directly notifies the user data repository whether it is required to send a notification message or not via the interface message, wherein the interface message carries the indication flag indicating whether it is required to trigger the notification message or not. The notification message in the notification process comprises the notification type and the notification data information, wherein the notification type is used to indicate the service operation required to be performed by the application front end receiving the notification message, such as the subscription to notification on the subscription data or location cancellation.

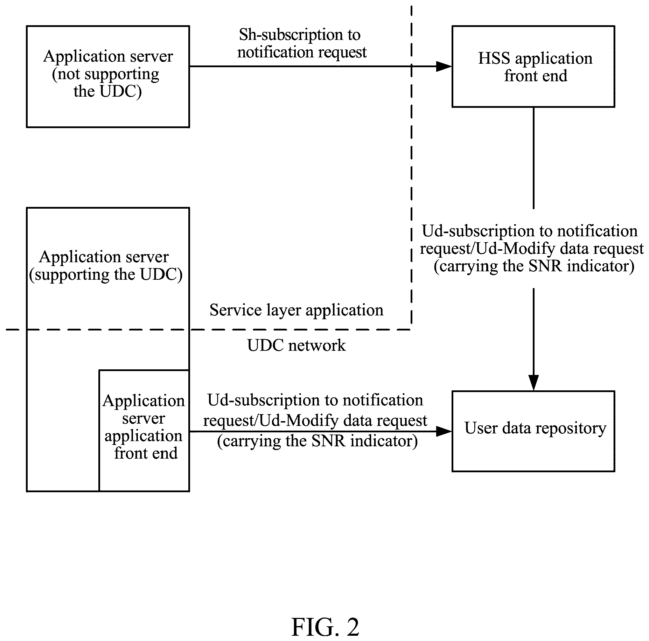

FIG. 2 is a schematic diagram of explicitly establishing the subscription to notification relationship based on the UDC network system in the present invention. As shown in FIG. 2, the explicit subscription relationship establishment mainly comprises the following technical features.

The user data repository pre-configures the notification triggering condition and the notification type. The notification triggering condition comprises the data subscription status and data change status that are pre-configured as data unsubscribed and data unchanged respectively. The notification type is configured as subscription to notification on the subscription data.

The application server (AS) supporting the user data convergence (UDC) comprises the AS front end that directly sends a subscription to notification request message or a modify data request message carrying the subscription to notification request (SNR) indicator to the user data repository via the Ud interface to make a request for establishing the subscription to notification relationship.

The AS which doesn't support the UDC sends the subscription to notification request message via the existing Sh interface of the HSS application front end. The HSS application front end sends the user data repository via the Ud interface a subscription to notification request message or a modify data request message carrying the SNR indicator to make a request for establishing the subscription to notification relationship.

After the user data repository receives the explicit subscription to notification request, it establishes the subscription to notification relationship, that is, it stores the subscription to notification data information on the subscription data, including the original address of the subscriber (the initial entity identity or address of data subscription, such as the AS identity or address, or the AS application front end identity or address) and the subscription data; meanwhile, it sets the data subscription status corresponding to the notification triggering condition as subscribed. The subscription data describes the user subscription data corresponding to the subscription data subscribed by subscription to notification event, which can be one request data identity or request data domain name rather than the specific content of the user subscription data.

The main technical features of the implicit subscription relationship establishment based on the UDC network system in the present invention is that: the user data repository pre-configures and stores the notification triggering condition and the notification type according to the local configuration policy, and the notification triggering condition has a corresponding relationship with the notification type; the notification triggering condition can be a subscription event, or a subscription event and the change status of the data related to the subscription event, or the notification flag corresponding to the notification relationship and carried in the message in which the event is located, and these events are events involved in the notification process; for example, the notification triggering condition is the user location information deletion event, and the corresponding notification type is the location cancellation, and for example, the triggering condition is that there is a notification flag carried in the sent message of the user location information deletion event, and the notification type corresponding to the notification flag is the location cancellation, and for example, the notification triggering condition is the S6a single registration indication flag bit setting event, and the corresponding notification type is the MAP location cancellation.

The content of the notification triggering condition comprises the data subscription status as well as the data change status, or the subscription event, or the subscription event and the data change status; wherein, the data subscription status describes the subscription status of the data requested by a subscription to notification event on subscription data, including data subscribed or data unsubscribed; the data change status describes the change status of the data subscribed by the subscription to notification event on the subscription data, including the subscription data changed or the subscription data unchanged; the subscription event describes the event required to be triggered for the notification message, and it includes but not limited to the subscription data subscribed by subscription to notification event or the user location information deletion event.

It should be noted that the abovementioned notification type is location cancellation, and the corresponding subscription event might be any other event besides the user location information deletion event; the corresponding subscription event of the MAP location cancellation can be any event but the S6a single registration indication flag bit setting event.

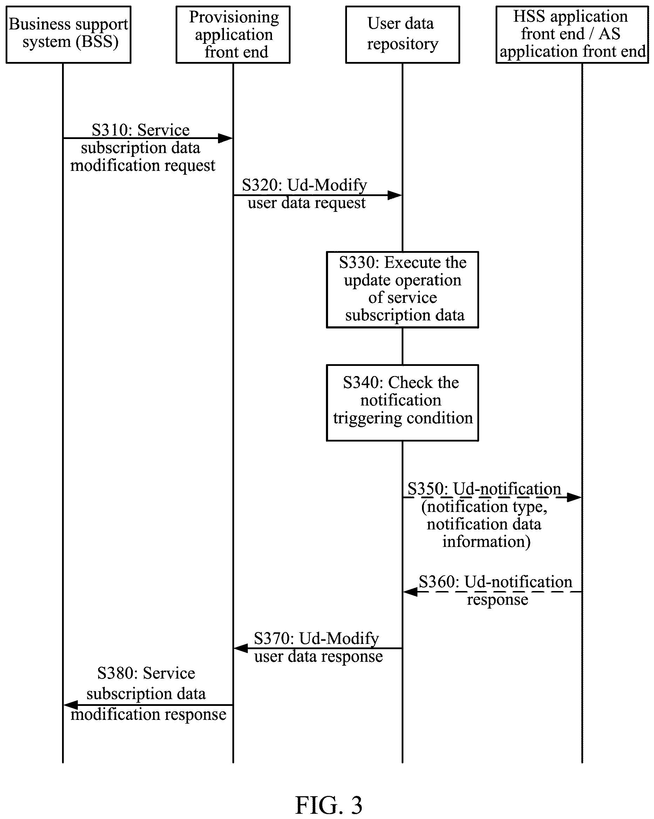

FIG. 3 is the flow chart of the first implementation method for triggering the notification about the modification in the service subscription data in accordance with an embodiment of the present invention. As shown in FIG. 3, the first implementation method for triggering the notification mainly comprises the following steps:
Step S310: the business support system (BSS) sends a service subscription data motification request message to the Provisioning (mainly providing support for the operators deploying services) application front end;
Step S320: the Provisioning application front end receives the service subscription data motification request message sent from the BSS and sends a modify user data request message to the user data repository via the uniform Ud interface between the Provisioning application front end and the user data repository, so as to modify the service subscription data stored in the user data repository.
Step S330: after the user data repository receives the modify user data request message sent from the Provisioning application front end, it performs the access control;
   after carrying out effective authentication on the Provisioning application front end and carrying out effective authorization on the request data, the user data repository executes the update operation of service subscription data;
Step S340: the user data repository checks the notification triggering condition, that is, it judges whether the request data (here it is the service subscription data) changes or not, and check the subscription status of the request data;
   judge whether the request data changes or not according to the change status of the request data; the change status of the request data can be acquired by the user data repository comparing the difference in the new and old data;
   if the request data changes, and the change notification event of the request data has been subscribed, the user data repository triggers the notification process; otherwise, the notification process in steps S350 and S360 is not triggered;
Step S350: the user data repository sends a notification message to the notification event subscriber via the Ud interface, and the notification message carries the notification type and the notification data information;
   the notification type is configured as subscription to notification on the subscription data, and it is used to indicate the application front end supporting the subscription to notification application to send the subscription to notification data to the subscriber;
   the application front end supporting the subscription to notification application can be the HSS application front end, it sends the subscription to notification data to the AS by the notification message via the Sh interface; the application front end supporting the subscription to notification application can also be the AS application front end supporting the UDC network;
   the notification data information comprises the original address of the subscriber (the initial entity identity or address of data subscription, such as the AS identity or address, or the AS application front end identity or address), the user identity (which uniquely identifies the user, such as the international mobile subscriber identity (IMSI)) and the subscription to notification data; wherein, the subscription to notification data is the latest changing content of the data subscribed in the subscription to notification event;
Step S360: the HSS application front end or the AS application front end returns a notification response message to the user data repository;
Step S370: the user data repository returns a modify user data response message to the Provisioning application front end;
Step S380: the Provisioning application front end returns the user data modification result to the BSS via the service subscription data modification response message.

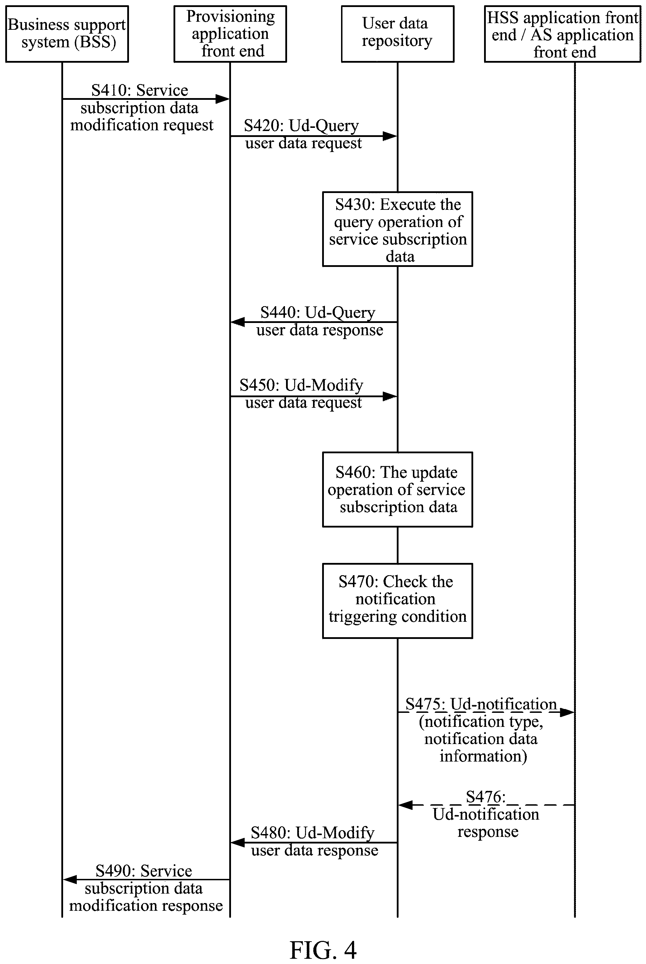

FIG. 4 is the flow chart of the second implementation method for triggering the notification about the modification in service subscription data in accordance with an embodiment of the present invention. As shown in FIG. 4, the method for implementing the notification triggering mainly comprises the following steps:
Step S410: the business support system (BSS) sends a service subscription data motification request message to the Provisioning application front end;
Step S420: the Provisioning application front end receives the service subscription data motification request message sent from the BSS and sends a query user data request message to the user data repository via the uniform Ud interface between the Provisioning application front end and the user data repository at first, so as to read the original service subscription data stored in the user data repository.
Step S430: after the user data repository receives the query user data request message, it performs the access control; after carrying out effective authentication on the Provisioning application front end and carrying out effective authorization on the request data, the user data repository executes the query operation of the service subscription data;
Step S440: the user data repository returns the query user data response message to the Provisioning application front end, and sends the original service subscription data to the Provisioning application front end;
Step S450: after the Provisioning application front end receives the original service subscription data, it judges whether the service subscription data changes or not, that is, compares the difference in the new and old data; if the service subscription data changes, the Provisioning application front end sets the data update flag, and carries the flag in the modify user data request message and sends it to the user data repository via the Ud interface;
Step S460: the user data repository receives the modify user data request message sent from the Provisioning application front end, and after judging that the Provisioning application front end has been authenticated and the request data has been authorized, the user data repository executes the update operation of the service subscription data;
Step S470: the user data repository checks the notification triggering condition, that is, it judges whether the request data (it is service subscription data here) changes or not, and checks the subscription status of the request data;
   judge whether the request data changes or not according to the change status of the request data; the change status of the request data can be acquired by the user data repository according to the data update flag carried in the modify user data request message;
   if the request data changes, and the change notification event of the request data has been subscribed, the user data repository triggers the notification process; otherwise, the notification process in steps S475 and S476 is not triggered;
Step S475: the user data repository sends a notification message to the notification event subscriber via the Ud interface, and the notification message carries the notification type and the notification data information;
   the notification type is configured as subscription to notification on the subscription data, and it is used to indicate the application front end supporting the subscription to notification to send the subscription to notification data to the subscriber;
   the application front end supporting the subscription to notification application can be the HSS application front end, and it sends the subscription to notification data to the AS by the notification message via the Sh interface; the application front end supporting the subscription to notification application can also be the AS application front end supporting the UDC network;
   the notification data information comprises the original address of the subscriber (the initial entity identity or address of the data subscription, such as the AS identity or address, or the AS application front end identity or address), the user identity (which uniquely identifies the user, such as IMSI) and the subscription to notification data; the subscription to notification data is the latest changing content of the data subscribed in the subscription to notification event;
Step S476: the HSS application front end or the AS application front end returns a notification response message to the user data repository;
Step S480: the user data repository returns a modify user data response message to the Provisioning application front end;
Step S490: the Provisioning application front end returns the result of the user data modification to the BSS by the service subscription data modification response message.

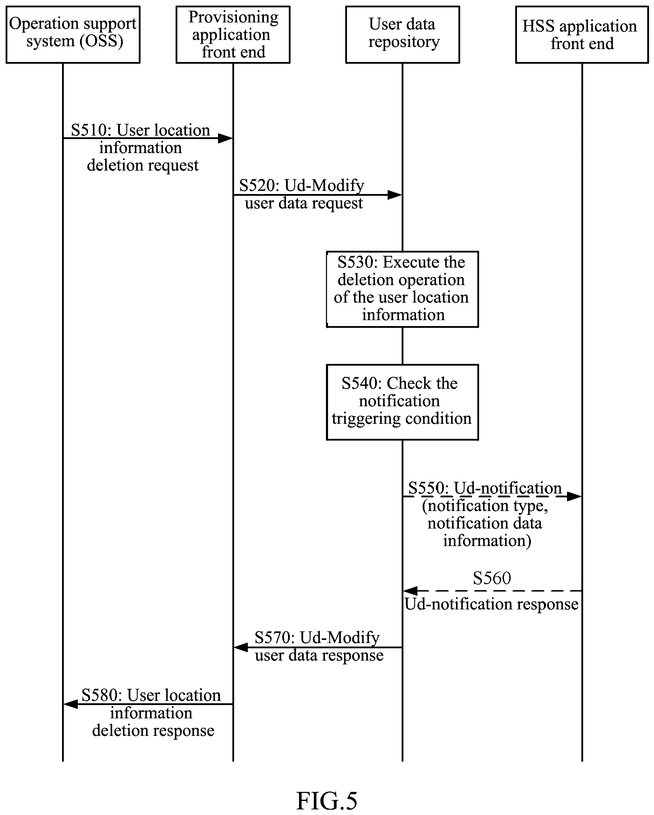

FIG. 5 is the flow chart of triggering a notification after deleting the user location information in accordance with an embodiment of the present invention. As shown in FIG. 5, the notification triggering process mainly comprises the following steps:
Step 510: the operation support system (OSS) sends a user location information deletion request message to the Provisioning application front end;
Step S520: the Provisioning application front end receives the user location information deletion request message sent from the OSS and sends a modify user data request message to the user data repository via the uniform Ud interface between the Provisioning application front end and the user data repository, so as to delete the original user location information stored in the user data repository.

In other embodiments, a notification flag is carried in the modify data request message, and the notification flag corresponds to the notification type of location cancellation, thus this notification flag is carried in the modify data request message to indicate the user data repository to trigger the notification process of the location information deletion.
Step S530: after the user data repository receives the modify user data request message sent from the Provisioning application front end, it performs the access control;
   after carrying out effective authentication on the Provisioning application front end and carrying out effective authorization on the request data, the user data repository executes the deletion operation of the user location information;
Step S540: the user data repository checks the notification triggering condition, that is, it judges whether the user location information deletion event needs to trigger the notification process or not, and if yes, the user data repository triggers the notification process; otherwise, the notification process in steps S550 and S560 is not triggered;
Step 550, the user data repository sends a notification message to the HSS application front end via the Ud interface, and the notification message carries the notification type and the notification data information;
   the notification type is configured as location cancellation, and it is used to indicate the HSS application front end to delete the user's registration information in the current network;
   the notification data information comprises the information required by the HSS application front end to execute the abovementioned deletion operation, such as the user identity (which uniquely identifies the user, such as IMSI) and the current registered network entity identity or address of user;
Step S560: the HSS application front end returns a notification response message to the user data repository;
Step S570: the user data repository returns a modify user data response message to the Provisioning application front end;
Step S580: the Provisioning application front end returns the user location information deletion result to the OSS by the user location information deletion response message.

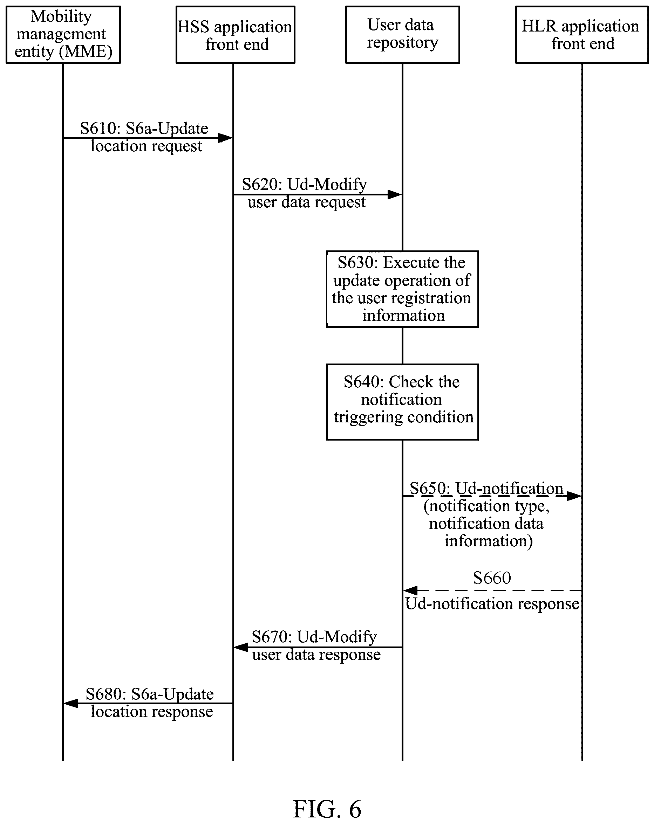

FIG. 6 is the flow chart of sending a message request to another network domain based on the notification message triggering in accordance with an embodiment of the present invention. As shown in FIG. 6, the process of message request mainly comprises the following steps:
Step S610: the mobile management entity (MME) sends an update location request message to the HSS application front end supporting the Diameter application via the S6a interface, and the update location request message carries the single registration indication flag bit;
Step S620: the HSS application front end receives the update location request message sent from the MME, it sends a modify user data request message to the user data repository via the uniform Ud interface between the HSS application front end and the user data repository, so as to store or update the user registration information in the user data repository.
   In other embodiments, a notification flag is carried in the modify data request message, and the notification flag corresponds to the notification type of MAP-location cancellation, thus this notification flag carried in the modify data request message is used to indicate the user data repository to trigger the notification process of MAP- location cancellation.
Step S630: after the user data repository receives the modify user data request message sent from the HSS application front end, it performs the access control; after carrying out effective authentication on the HSS application front end and carrying out effective authorization on the request data, the user data repository executes the update operation of the user registration information;
Step S640: the user data repository checks the notification triggering condition, that is, it judges whether the single registration indication flag bit event in the S6a- update location request message involved in the user registration information needs to trigger the notification process or not, and if yes, the user data repository triggers the notification process; otherwise, the notification process in steps S650 and S660 is not triggered.
   In other embodiments, check whether the modify data request message carries the notification flag corresponding to the notification type of MAP-location cancellation or not, and if yes, the user data repository triggers the notification process of MAP-location cancellation;
Step 650, the user data repository sends a notification message to the HLR application front end supporting the MAP application via the Ud interface, and the notification message carries the notification type and the notification data information;
   the notification type is configured as MAP-location cancellation, and it is used to indicate the HSS application front end to delete the user's registration information in the current GPRS network;
   the notification data information comprises the information required by the HLR application front end to perform the abovementioned deletion operation, such as the user identity (which uniquely identifies the user, such as IMSI) and the user's registered network entity identity or address in the GPRS network in which the user is located;
Step S660: the HLR application front end returns a notification response message to the user data repository;
Step S670: the user data repository returns a modify user data response message to the HSS application front end;
Step S680: the HSS application front end returns the result of location update to the MME by the update location response message.

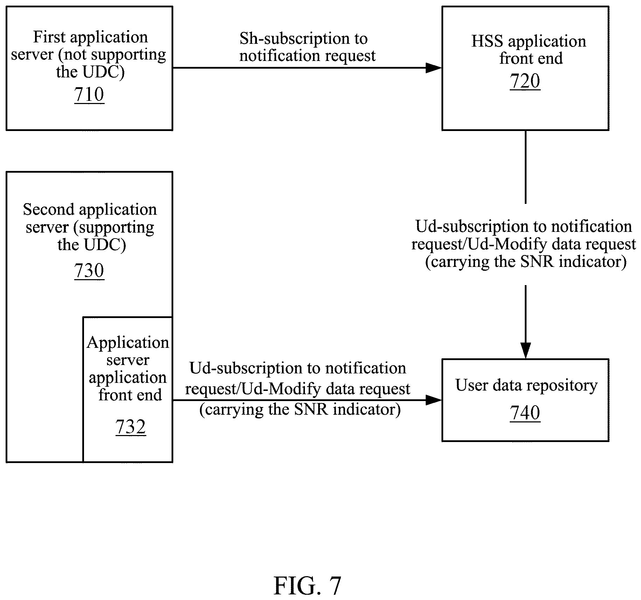

FIG. 7 is a combination schematic diagram of an embodiment of the UDC network system in accordance with the present invention. Refer to the corresponding content in the figures from FIG. 2 to FIG. 6 please, and the system embodiment shown in FIG. 7 mainly comprises the first application server 710, the HSS application front end 720, the second application server 730 and the user data repository 740, wherein:
the first application server 710 is an application server which doesn't support the UDC, and it is used to send the subscription to notification request message to the HSS application front end 720 via the Sh interface;
the HSS application front end 720 is used to: after receiving the subscription to notification request message sent from the first application server 710, send a subscription to notification request message or a modify data request message carrying the SNR indicator to the user data repository 740 via the Ud interface;
the second application server 730 is an application server supporting the UDC, and it is used to send the subscription to notification request message or the modify data request message carrying the SNR indicator by the internal application server front end 732 via the Ud interface to the user data repository;
the user data repository 740 is used to establish a subscription to notification relationship according to the subscription to notification request message or the modify data request message carrying the SNR indicator sent by the HSS application front end 720 or the second application server 730, or directly pre-establish the subscription to notification relationship; when receiving the update data request, if the update data request meets the notification triggering condition in the subscription to notification relationship, it sends a notification message to the notification event subscriber; the subscription to notification relationship comprises the notification triggering condition for the user data repository sending a notification message.

The operation of the user data repository 740 establishing the subscription to notification relationship comprises storing the original address of subscriber and the subscription data, and setting the data subscription status corresponding to the notification triggering condition as subscribed. The original address of subscriber comprises the AS identity or address, or the AS application front end identity or address. The subscription data is a request data identity or a request data domain name, and it describes the user subscription data corresponding to the subscription data subscribed by subscription to notification event.

The above description is only the preferred specific embodiments of the present invention rather than restriction of the protection scope of the present invention, and for those skilled in the field, variations or replacements can be thought of easily within the technical scope provided by the present invention, which should all be included in the protection scope of the present invention. Therefore, the protection scope of the present invention should belong to the protection scope of the claims of the present invention.

### Industrial Applicability

Compared with the prior technology, with explicitly or implicitly establishing a subscription to notification relationship in the present invention, the problem about how to implement the subscription to notification in network systems where the application logic processing and data storage are separated is effectively solved, and the triggering of the expected notification message is achieved based on the established subscription to notification relationship.

## Claims

1. A method for implementing subscription to notification, applied to a user data convergence network including a user data repository, wherein the method comprises:
establishing a subscription to notification relationship in the user data repository; the subscription to notification relationship comprising a notification triggering condition which describes a condition of the user data repository sending a notification message;
when receiving an update data request (S330), if the update data request meets the notification triggering condition the user data repository sending the notification message to a notification event subscriber,
wherein:
content of the notification triggering condition comprises a data subscription status and a data change status, or a subscription event as well as the data change status;
the data subscription status describes a subscription status of data requested by a subscription to notification event on subscription data;
the data change status describes a change status of data subscribed by the subscription to notification event on the subscription data;
the subscription event describes an event required to be triggered for the notification message;
as long as any one of following conditions is met, the update data request meets the notification triggering condition:
data is in a subscribed status and changes;
the event is in the subscribed status and data related to the event changes;
a message corresponding to the event carries a notification flag indicating to send the notification message.

2. The method of claim 1, wherein the step of establishing the subscription to notification relationship in the user data repository is implemented by one of following methods:
after the user data repository receives a subscription to notification request message or a modify data request message carrying a subscription to notification request indicator, storing subscription to notification information; or
the user data repository pre-configuring and storing the subscription to notification information according to a local configuration policy.

3. The method of claim 2, wherein:
the subscription to notification request message or modify data request message is sent by an application server supporting user data convergence to the user data repository via an application server application front end, or sent by a home subscriber service application front end indicated by an application server which doesn't support the user data convergence to the user data repository.

4. The method of claim 1, wherein:
the step of establishing the subscription to notification relationship comprises: storing an original address of subscriber and subscription data,
and setting a data subscription status corresponding to the notification triggering condition as subscribed;
wherein the original address of the subscriber comprises: an application server identity or address, or an application server application front end identity or address;
the subscription data describes that user subscription data corresponding to a subscription data subscribed by subscription to notification event is a request data identity or a request data domain name;
or,
the step of establishing the subscription to notification relationship comprises: the user data repository pre-configuring and storing the notification triggering condition and a notification type according to a local configuration policy, and the notification triggering condition having a corresponding relationship with the notification type.

5. The method of claim 1, wherein:
after the step of receiving the update data request, the method also comprises:
judging whether user subscription data changes or not and checking whether the user subscription data is in the subscribed status or not, or
judging whether the event corresponding to the update data request is in the subscribed status and related user subscription data changes or not, or judging whether the event corresponding to the update data request carries the notification flag or not; and
determining whether the update data request meets the notification triggering condition or not according to a judgment result.

6. The method of claim 5, wherein:
the step of judging whether the user subscription data changes or not comprises:
the user data repository or an application front end comparing whether the user subscription data changes or not and acquiring a comparison result;
the step of determining whether the update data request meets the notification triggering condition or not according to the judgment result comprises: the user data repository determining whether the update data request meets the notification triggering condition or not according to the comparison result.

7. The method of claim 1, wherein:
after the step of receiving the update data request, the method also comprises:
judging whether the notification is required to be sent or not according to related information of an application front end, which comprises: the user data repository judging whether the application front end sending a request message supports an application type required to process the notification message;
or,
judging whether the notification is required to be sent or not according to an indication flag carried in the request message.

8. The method of claim 1, wherein:
the subscription to notification relationship comprises a notification type, and the notification type is to indicate a service operation required to be executed by the notification event subscriber;
the notification message carries the notification type and notification data information.

9. The method of claim 8, wherein:
when the notification type indicates the notification event subscriber to perform a subscription to notification on subscription data, the notification data information comprises an original address of subscriber, a user identity and subscription to notification data; the subscription to notification data is the latest changing content of data subscribed by a subscription to notification event;
when the notification type indicates the notification event subscriber to execute location cancellation, the notification data information comprises the user identity as well as a current registered network entity identity or address of user.

10. The method of claim 9, wherein:
the step of the notification event subscriber executing the location cancellation comprises:
indicating a home subscriber service application front end to delete user's registration information in a current network, or indicating a home location register application front end to delete the user's registration information in a current general packet radio system network.

11. A user data convergence network system, comprising a first application server (710), a second application server (730), a home subscriber service application front end and a user data repository (740), wherein:
the first application server (710) is configured to send a subscription to notification request message to the home subscriber service application front end;
the home subscriber service application front end is configured to: after receiving the subscription to notification request message sent from the first application server (710), send the subscription to notification request message or a modify data request message carrying a subscription to notification request indicator to the user data repository (740);
the second application server (730) is configured to send the subscription to notification request message or the modify data request message carrying the subscription to notification request indicator to the user data repository (740) via an application server application front end;
the user data repository (740) is configured to: establish a subscription to notification relationship according to the subscription to notification request message or the modify data request message carrying the subscription to notification request indicator, or pre-establish the subscription to notification relationship; the subscription to notification relationship comprises a notification triggering condition, and the notification triggering condition describes a condition of the user data repository (740) sending a notification message; when receiving an update data request, if the update data request meets the notification triggering condition, send the notification message to a notification event subscriber;
wherein:
content of the notification triggering condition comprises a data subscription status and a data change status, or the subscription event as well as the data change status;
the data subscription status describes a subscription status of data requested by a subscription to notification event on subscription data;
the data change status describes a change status of data subscribed by the subscription to notification event on the subscription data;
the subscription event describes an event required to be triggered for the notification message;
as long as any one of following conditions is met, the update data request meets the notification triggering condition:
data is in a subscribed status and changes;
the event is in the subscribed status and data related to the event changes;
a message corresponding to the event carries a notification flag indicating to send the notification message.

12. The system of claim 11, wherein:
the user data repository (740) is configured to establish the subscription to notification relationship by a following method: storing an original address of subscriber and subscription data, setting a data subscription status corresponding to the notification triggering condition as subscribed; the original address of subscriber comprising: an application server identity or address, or an application server application front end identity or address; the subscription data describing user subscription data corresponding to a subscription data change subscribed by subscription to notification event.

## Patentansprüche

1. Verfahren zum Umsetzen einer Anmeldung für eine Benachrichtigung, die auf ein Benutzerdatenkonvergenz-Netzwerk angewendet wird, das einen Benutzerdatenspeicher beinhaltet, wobei das Verfahren Folgendes umfasst:
das Aufbauen einer Beziehung einer Anmeldung für eine Benachrichtigung im Benutzerdatenspeicher; wobei die Beziehung der Anmeldung für eine Benachrichtigung eine Benachrichtigungsauslösebedingung umfasst, die eine Bedingung beschreibt, dass der Benutzerdatenspeicher eine Benachrichtigungsmitteilung sendet;
wenn eine Aktualisierungsdatenanforderung (S330) empfangen wird, wenn die Aktualisierungsdatenanforderung die Benachrichtigungsauslösebedingung erfüllt, sendet der Benutzerdatenspeicher die Benachrichtigungsmitteilung an einen Benachrichtigungsereignisteilnehmer,
wobei:
Inhalte der Benachrichtigungsauslösebedingung einen Datenanmeldezustand und einen Datenänderungszustand oder ein Anmeldeereignis sowie den Datenänderungszustand umfassen;
der Datenanmeldezustand einen Anmeldezustand von Daten beschreibt, die durch ein Ereignis der Anmeldung für eine Benachrichtigung für Anmeldedaten angefordert wurden;
der Datenänderungszustand einen Änderungszustand von Daten beschreibt, die durch das Ereignis der Anmeldung für eine Benachrichtigung in Bezug auf Anmeldedaten abonniert wurden;
das Anmeldeereignis beschreibt ein Ereignis, das für die Benachrichtigungsmitteilung ausgelöst werden muss;
so lange eine beliebige der folgenden Bedingungen erfüllt ist,
erfüllt die Aktualisierungsdatenanforderung die Benachrichtigungsauslösebedingung:
Daten befinden sich in einem abonnierten Zustand und ändern sich;
das Ereignis befindet sich in einem abonnierten Zustand und Daten in Bezug auf das Ereignis ändern sich;
eine Mitteilung, die das Ereignis betrifft, weist eine Benachrichtigungskennzeichnung auf, die anzeigt, dass die Benachrichtigungsmitteilung gesendet werden soll.

2. Verfahren nach Anspruch 1, wobei der Schritt des Aufbauens der Beziehung der Anmeldung für eine Benachrichtigung im Benutzerdatenspeicher durch eines der folgenden Verfahren umgesetzt ist:
nachdem der Benutzerdatenspeicher eine Anforderungsmitteilung einer Anmeldung für eine Benachrichtigung oder eine Anforderungsmitteilung zur Datenmodifikation empfängt, die ein Anforderungskennzeichen einer Anmeldung für eine Benachrichtigung aufweist, das Speichern von Informationen der Anmeldung zur Benachrichtigung; oder
das Vorkonfigurieren und Speichern der Informationen zur Anmeldung für eine Benachrichtigung gemäß einer örtlichen Konfigurationsrichtlinie durch den Benutzerdatenspeicher.

3. Verfahren nach Anspruch 2, wobei:
die Anforderungsmitteilung einer Anmeldung für eine Benachrichtigung oder eine Anforderungsmitteilung zur Datenmodifikation durch einen Anwendungsserver, der Benutzerdatenkonvergenz mit dem Benutzerdatenspeicher unterstützt, über ein Anwendungsserveranwendungsfrontend gesendet wird oder durch ein Heimatteilnehmer-Serviceanwendungsfrontend gesendet wird, das durch einen Anwendungsserver angezeigt wird, der die Benutzerdatenkonvergenz mit dem Benutzerdatenspeicher nicht unterstützt.

4. Verfahren nach Anspruch 1, wobei:
der Schritt des Aufbauens der Beziehung der Anmeldung für eine Benachrichtigung Folgendes umfasst: das Speichern einer Ursprungsadresse der Teilnehmer- und Anmeldungsdaten, und das Einstellen eines Datenanmeldungszustands, welcher der Benachrichtigungsauslösebedingung, wie abonniert, entspricht;
wobei die Ursprungsadresse des Teilnehmers Folgendes umfasst:
eine Anwendungsserveridentität oder -adresse, oder eine Anwendungsserveranwendungsfrontendidentität oder -adresse;
wobei die Anmeldungsdaten beschreiben, dass Benutzeranmeldungsdaten, die Anmeldungsdaten entsprechen, die durch das Ereignis der Anmeldung für eine Benachrichtigung abonniert wurden, eine Anforderungdatenidentität oder ein Anforderungsdatendomainname sind;
oder
der Schritt des Aufbauens der Beziehung der Anmeldung für eine Benachrichtigung Folgendes umfasst: das Vorkonfigurieren und Speichern der Benachrichtigungsauslösebedingung und einen Benachrichtungstyp gemäß einer örtlichen Konfigurationsrichtlinie durch den Benutzerdatenspeicher. die Benachrichtigungsauslösebedingung, die eine entsprechende Beziehung zum Benachrichtigungstyp aufweist.

5. Verfahren nach Anspruch 1, wobei:
nach dem Schritt des Empfangens der Aktualisierungsdatenanforderung, das Verfahren außerdem Folgendes umfasst:
das Beurteilen, ob sich Benutzeranmeldedaten ändern oder nicht, und das Überprüfen, ob sich die Benutzeranmeldedaten im abonnierten Zustand befinden oder nicht und sich zugehörige Benutzeranmeldedaten ändern oder nicht, oder das Beurteilen, ob das Ereignis, das der Aktualisierungsdatenanforderung entspricht, die Benachrichtigungskennzeichnung aufweist oder nicht; und
das Bestimmen, ob die Aktualisierungsdatenanforderung die Benachrichtigungsauslösebedingung gemäß eines Beurteilungsergebnisses erfüllt oder nicht.

6. Verfahren nach Anspruch 5, wobei:
der Schritt des Beurteilens, ob sich die Benutzeranmeldedaten ändern oder nicht, Folgendes umfasst:
das Vergleichen durch den Benutzerdatenspeicher oder ein Anwendungsfrontend, ob die Benutzeranmeldedaten sich ändern oder nicht, und das Gelangen zu einem Vergleichsergebnis;
der Schritt des Bestimmens, ob die Aktualisierungsdatenanforderung die Benachrichtigungsauslösebedingung gemäß dem Beurteilungsergebnis erfüllt oder nicht, Folgendes umfasst: das Bestimmen durch den Benutzerdatenspeicher, ob die Aktualisierungsdatenanforderung die Benachrichtigungsauslösebedingung gemäß dem Vergleichsergebnis erfüllt oder nicht.

7. Verfahren nach Anspruch 1, wobei:
nach dem Schritt des Empfangens der Aktualisierungsdatenanforderung, das Verfahren außerdem Folgendes umfasst:
das Beurteilen, ob die Benachrichtigung gemäß den zugehörigen Informationen eines Anwendungsfrontends gesendet werden muss oder nicht, das Folgendes umfasst: das Beurteilen durch den Benutzerdatenspeicher, ob das Anwendungsfrontend, das eine Anforderungsmitteilung sendet, einen Anwendungstyp unterstützt, der für die Verarbeitung der Benachrichtigungsmitteilung benötigt wird;
oder das Beurteilen, ob die Benachrichtigung gemäß einer Anzeigekennzeichnung, welche in der Anforderungsmitteilung enthalten ist, gesendet werden muss oder nicht.

8. Verfahren nach Anspruch 1, wobei:
die Beziehung der Anmeldung für eine Benachrichtigung einen Benachrichtigungstyp umfasst und der Benachrichtigungstyp dazu dient, eine Servicemaßnahme anzuzeigen, die durch den Benachrichtigungsereignisteilnehmer ausgeführt werden muss;
die Benachrichtigungsmitteilung den Benachrichtigungstyp und Benachrichtigungsdateninformationen aufweist.

9. Verfahren nach Anspruch 8, wobei:
wenn der Benachrichtigungstyp anzeigt, dass der Benachrichtigungsereignisteilnehmer eine Anmeldung für eine Benachrichtigung zu Anmeldedaten durchführen soll, die Benachrichtigungsdateninformationen eine Ursprungsadresse des Teilnehmers, einer Benutzeridentität und Daten der Anmeldung für eine Benachrichtigung umfassen; die Daten der Anmeldung für eine Benachrichtigung die neuesten sich ändernden Inhalte von Daten sind, die durch ein Ereignis der Anmeldung für eine Benachrichtigung abonniert wurden;
wenn der Benachrichtigungstyp anzeigt, dass der Benachrichtigungsereignisteilnehmer einen Standortabbruch ausführen soll, die Benachrichtigungsdateninformationen die Benutzeridentität sowie eine aktuell registrierte Netzwerkinstanzidentität oder eine Adresse des Benutzers umfassen.

10. Verfahren nach Anspruch 9, wobei:
der Schritt des Ausführens des Standortabbruchs durch den Benachrichtigungsereignisteilnehmer Folgendes umfasst:
das Anzeigen, dass ein Heimtatteilnehmerservice-Anwendungsfrontend Registrierungsinformationen des Benutzers in einem aktuellen Netzwerk löschen soll, oder das Anzeigen, dass ein Heimatstandortregistrierungs-Anwendungsfrontend die Registrierungsinformationen des Benutzers in einem aktuellen Netzwerk eines allgemeinen Paketfunksystems löschen soll.

11. Benutzerdatenkonvergenznetzwerksystem, das einen ersten Anwendungsserver (710), einen zweiten Anwendungsserver (730), ein Heimatteilnehmerservice-Anwendungsfrontend und einen Benutzerdatenspeicher (740) umfasst, wobei:
der erste Anwendungsserver (710) dazu konfiguriert ist, eine Anforderungsmitteilung der Anmeldung für eine Benachrichtigung an das Heimatteilnehmerservice-Anwendungsfrontend zu senden;
das Heimatteilnehmerservice-Anwendungsfrontend zu Folgendem konfiguriert ist: nach dem Empfangen der Anforderungsmitteilung der Anmeldung für eine Benachrichtigung, die vom ersten Anwendungsserver (710) gesendet wurde, dem Senden der Anforderungsmitteilung der Anmeldung für eine Benachrichtigung oder einer Anforderungsmitteilung zur Datenmodifkation, die eine Anforderungskennzeichnung der Anmeldung für eine Benachrichtigung aufweist, an den Benutzerdatenspeicher (740);
der zweite Anwendungsserver (730) dazu konfiguriert ist, die Anforderungsmitteilung der Anmeldung für eine Benachrichtigung oder die Anforderungsmitteilung der Datenmodifikation, welche die Anforderungskennzeichnung der Anmeldung für eine Benachrichtigung aufweist, über ein AnwendungsserverAnwendungsfrontend an den Benutzerdatenspeicher (740) zu senden;
der Benutzerdatenspeicher (740) zu Folgendem konfiguriert ist:
dem Aufbauen einer Beziehung der Anmeldung für eine Benachrichtigung gemäß der Anforderungsmitteilung der Anmeldung für eine Benachrichtigung oder der Anforderungsmitteilung der Datenmodifikation, welche die Anforderungskennzeichnung der Anmeldung für eine Benachrichtigung aufweist, oder dem Aufbauen im Voraus der Beziehung der Anmeldung für eine Benachrichtigung;
die Beziehung der Anmeldung für eine Benachrichtigung eine Benachrichtigungsauslösebedingung umfasst, und die Benachrichtigungsauslösebedingung eine Bedingung des Benutzerdatenspeichers (740) beschreibt, der eine Benachrichtigungsmitteilung sendet; wenn eine Aktualisierungsdatenanforderung empfangen wird, wenn die Aktualisierungsdatenanforderung die Benachrichtigungsauslösebedingung erfüllt, dem Senden der Benachrichtigungsmitteilung an einen Benachrichtigungsereignisteilnehmer;
wobei:
Inhalte der Benachrichtigungsauslösebedingung einen Datenanmeldezustand und einen Datenänderungszustand oder das Anmeldeereignis sowie den Datenänderungszustand umfassen;
der Datenanmeldezustand einen Anmeldezustand von Daten beschreibt, die durch ein Ereignis der Anmeldung für eine Benachrichtigung für Anmeldedaten angefordert wurden;
der Datenänderungszustand einen Änderungszustand von Daten beschreibt, die durch das Ereignis der Anmeldung für eine Benachrichtigung in Bezug auf Anmeldedaten abonniert wurden;
das Anmeldeereignis ein Ereignis beschreibt, das für die Benachrichtigungsmitteilung ausgelöst werden muss;
so lange eine beliebige der folgenden Bedingungen erfüllt ist, erfüllt die Aktualisierungsdatenanforderung die Benachrichtigungsauslösebedingung:
Daten befinden sich in einem abonnierten Zustand und ändern sich; das Ereignis befindet sich in einem abonnierten Zustand und Daten in Bezug auf das Ereignis ändern sich;
eine Mitteilung, die das Ereignis betrifft, weist eine Benachrichtigungskennzeichnung auf, die anzeigt, dass die Benachrichtigungsmitteilung gesendet werden soll.

12. System nach Anspruch 11, wobei:
der Benutzerdatenspeicher (740) dazu konfiguriert ist, die Beziehung der Anmeldung für eine Benachrichtigung durch ein folgendes Verfahren aufzubauen: das Speichern einer Ursprungsadresse der Teilnehmer- und Anmeldungsdaten, das Einstellen eines Datenanmeldungszustands, welcher der Benachrichtigungsauslösebedingung, wie abonniert, entspricht;
wobei die Ursprungsadresse des Teilnehmers Folgendes umfasst:
eine Anwendungsserveridentität oder -adresse, oder eine Anwendungsserveranwendungsfrontendidentität oder -adresse;
wobei die Anmeldungsdaten, die Benutzeranmeldungsdaten beschreiben, die einer Anmeldungsdatenänderung entsprechen, die durch das Ereignis der Anmeldung für eine Benachrichtigung abonniert wurden.

## Revendications

1. Procédé de mise en oeuvre d'un abonnement à une notification, appliqué à un réseau à convergence de données d'utilisateur comprenant un référentiel de données d'utilisateur, dans lequel le procédé comprend :
l'établissement d'une relation entre un abonnement et une notification dans le référentiel de données d'utilisateur ; la relation entre l'abonnement et la notification comprenant une condition de déclenchement de notification qui décrit une condition du référentiel de données d'utilisateur envoyant un message de notification ;
lors de la réception d'une demande de données de mise à jour (S330), si la demande de données de mise à jour remplit la condition de déclenchement de notification, le référentiel de données d'utilisateur envoie le message de notification à un abonné à un événement de notification, dans lequel :
le contenu de la condition de déclenchement de notification comprend un état d'abonnement de données et un état de modification de données, ou un événement d'abonnement ainsi que l'état de modification de données ;
l'état d'abonnement de données décrit un état d'abonnement de données demandé par un abonnement à un événement de notification sur des données d'abonnement ;
l'état de modification de données décrit un état de modification des données souscrites par l'abonnement à un événement de notification sur les données d'abonnement ;
l'évènement d'abonnement décrit un événement qui doit être déclenché pour le message de notification ;
tant que l'une des conditions suivantes est remplie, la demande de données de mise à jour remplit la condition de déclenchement de notification :
les données sont dans un état d'abonnement et changent ;
l'évènement est dans l'état d'abonnement et les données relatives aux événements changent ;
un message correspondant à l'évènement porte un drapeau de notification indiquant l'envoi du message de notification.

2. Procédé selon la revendication 1, dans lequel l'étape d'établissement de la relation entre l'abonnement et la notification dans le référentiel de données d'utilisateur est mise en oeuvre par l'un des procédés suivants :
une fois que le référentiel de données d'utilisateur a reçu un message de demande d'abonnement à une notification ou un message de demande de modification de données portant un indicateur de demande d'abonnement à une notification, stockant les informations d'abonnement à une notification ; ou
le référentiel de données d'utilisateur préconfigurant et stockant les informations d'abonnement à une notification conformément à une politique de configuration locale.

3. Procédé selon la revendication 2, dans lequel :
le message de demande d'abonnement à une notification ou le message de demande de modification de données est envoyé par un serveur d'application prenant en charge la convergence des données d'utilisateur vers le référentiel de données d'utilisateur par un frontal d'application de serveur d'application, ou envoyé par un frontal d'application de service d'abonné domestique indiqué par un serveur d'application qui ne prend pas en charge la convergence des données d'utilisateur vers le référentiel de données d'utilisateur.

4. Procédé selon la revendication 1, dans lequel :
l'étape d'établissement de la relation entre l'abonnement et la notification comprend : le stockage d'une adresse d'origine de l'abonné et des données d'abonnement, et le réglage d'un état d'abonnement de données correspondant à la condition de déclenchement de la notification comme étant abonné ;
dans lequel l'adresse d'origine de l'abonné comprend : une identité ou une adresse de serveur d'application, ou une identité ou une adresse de frontal d'application de serveur d'application ;
les données d'abonnement décrivent que les données d'abonnement d'utilisateur correspondant à des données d'abonnement souscrites par l'abonnement à l'évènement de notification sont une identité de données de demande ou un nom de domaine de données de demande ; ou,
l'étape d'établissement de la relation entre un abonnement et une notification comprend : le référentiel de données d'utilisateur préconfigurant et stockant la condition de déclenchement de notification et un type de notification selon une politique de configuration locale, et la condition de déclenchement de notification ayant une relation correspondante avec le type de notification.

5. Procédé selon la revendication 1, dans lequel :
après l'étape de réception de la demande de données de mise à jour, le procédé comprend également :
l'évaluation pour savoir si les données d'abonnement d'utilisateur changent ou non et la vérification pour savoir si les données d'abonnement d'utilisateur sont dans l'état abonné ou non, ou l'évaluation pour savoir si l'évènement correspondant à la demande de données de mise à jour est dans l'état abonné et si les données d'abonnement d'utilisateur correspondantes changent ou non, ou l'évaluation pour savoir si l'évènement correspondant à la demande de données de mise à jour porte ou non le drapeau de notification ; et
la détermination pour savoir si la demande de données de mise à jour remplit ou non la condition de déclenchement de notification en fonction d'un résultat d'évaluation.

6. Procédé selon la revendication 5, dans lequel :
l'étape d'évaluation pour savoir si les données d'abonnement d'utilisateur changent ou non comprend :
le référentiel de données d'utilisateur ou un frontal d'application comparant si les données d'abonnement d'utilisateur changent ou non et obtenant un résultat de comparaison ;
l'étape de détermination pour savoir si la demande de données de mise à jour remplit ou non la condition de déclenchement de notification en fonction du résultat de l'évaluation comprend :
le référentiel de données d'utilisateur déterminant si la demande de données de mise à jour remplit ou non la condition de déclenchement de notification en fonction du résultat de comparaison.

7. Procédé selon la revendication 1, dans lequel :
après l'étape de réception de la demande de données de mise à jour, le procédé comprend également :
l'évaluation pour savoir si la notification doit être envoyée ou non en fonction d'informations associées à un frontal d'application, qui comprend : le référentiel de données d'utilisateur évaluant si le frontal d'application envoyant un message de demande prend en charge un type d'application requis pour traiter le message de notification ; ou,
l'évaluation pour savoir si la notification doit être envoyée ou non en fonction d'un drapeau d'indication porté dans le message de demande.

8. Procédé selon la revendication 1, dans lequel :
la relation entre l'abonnement et la notification comprend un type de notification, et le type de notification indique une opération de service devant être exécutée par l'abonné à un événement de notification ;
le message de notification porte le type de notification et les informations de données de notification.

9. Procédé selon la revendication 8, dans lequel :
lorsque le type de notification indique à l'abonné à un événement de notification d'effectuer un abonnement à une notification sur des données d'abonnement, les informations de données de notification comprennent une adresse d'origine d'abonné, une identité d'utilisateur et un abonnement à des données de notification ; l'abonnement aux données de notification est la dernière modification de contenu des données souscrites par un abonnement à un événement de notification ;
lorsque le type de notification indique à l'abonné à un événement de notification d'exécuter l'annulation de localisation, les informations de données de notification comprennent l'identité de l'utilisateur ainsi qu'une identité d'entité de réseau enregistrée actuelle ou une adresse d'utilisateur.

10. Procédé selon la revendication 9, dans lequel :
l'étape de l'abonné à un événement de notification exécutant l'annulation de localisation comprend :
l'indication d'un frontal d'application de service d'abonné domestique pour supprimer les informations d'enregistrement d'utilisateur dans un réseau actuel, ou l'indication d'un frontal d'application d'enregistrement de localisation de domicile pour supprimer les informations d'enregistrement d'utilisateur dans un réseau de système de radiocommunication par paquets général actuel.

11. Système de réseau de convergence de données d'utilisateur, comprenant un premier serveur d'application (710), un second serveur d'application (730), un frontal d'application de service d'abonné domestique et un référentiel de données d'utilisateur (740), dans lequel :
le premier serveur d'application (710) est configuré pour envoyer un message de demande d'abonnement à une notification au frontal d'application de service d'abonné domestique ;
le frontal d'application de service d'abonné domestique est configuré pour : après réception du message de demande d'abonnement à une notification, envoyé par le premier serveur d'application (710), envoyer le message de demande d'abonnement à une notification ou un message de demande de modification de données portant un indicateur de demande d'un abonnement à une notification, au référentiel de données d'utilisateur (740) ;
le second serveur d'application (730) est configuré pour envoyer le message de demande d'abonnement à une notification ou le message de demande de modification de données portant l'indicateur de demande d'un abonnement à une notification au référentiel de données d'utilisateur (740) par un frontal d'application de serveur d'application ; le référentiel de données d'utilisateur (740) est configuré pour : établir une relation entre un abonnement et une notification en fonction du message de demande d'abonnement à une notification ou du message de demande de modification de données portant l'indicateur de demande d'abonnement à une notification, ou pré-établir la relation entre un abonnement et une notification ; la relation entre un abonnement et une notification comprend une condition de déclenchement de notification, et la condition de déclenchement de notification décrit une condition du référentiel de données d'utilisateur (740) envoyant un message de notification ; lors de la réception d'une demande de données de mise à jour, si la demande de données de mise à jour remplit la condition de déclenchement de notification, envoyer le message de notification à un abonné à un événement de notification ; dans lequel :
le contenu de la condition de déclenchement de notification comprend un état d'abonnement de données et un état de modification de données, ou l'évènement d'abonnement ainsi que l'état de modification de données ;
l'état d'abonnement de données décrit un état d'abonnement de données demandé par un abonnement à un événement de notification sur des données d'abonnement ;
l'état de modification des données décrit un état de modification de données souscrites par l'abonnement à un événement de notification sur les données d'abonnement ;
l'évènement d'abonnement décrit un événement qui doit être déclenché pour le message de notification ;
tant que l'une des conditions suivantes est remplie, la demande de données de mise à jour remplit la condition de déclenchement de notification :
les données sont dans un état d'abonnement et changent ;
l'évènement est dans l'état d'abonnement et les données relatives à l'évènement changent ;
un message correspondant à l'évènement porte un drapeau de notification indiquant l'envoi du message de notification.

12. Système selon la revendication 11, dans lequel :
le référentiel de données d'utilisateur (740) est configuré pour établir la relation entre l'abonnement et la notification par un procédé suivant : le stockage d'une adresse d'origine d'abonné et des données d'abonnement, le réglage d'un état d'abonnement de données correspondant à la condition de déclenchement de notification comme étant abonné ; l'adresse d'origine d'abonné comprenant : une identité ou une adresse de serveur d'application, ou une identité ou une adresse de frontal d'application de serveur d'application ; les données d'abonnement décrivant les données d'abonnement d'utilisateur correspondant à une modification des données d'abonnement souscrites par l'abonnement à un événement de notification.
